# FASCICULE DE BREVET EUROPEEN

(11) **EP 2 513 592 B1**
(45) Date de publication et mention de la délivrance du brevet: **25.02.2015**
(21) Numéro de dépôt: 10794921.6
(22) Date de dépôt: 01.12.2010
(51) Int. Cl.: F41G 7/22, G06K 9/32

(54) **PROCEDE DE DESIGNATION D'UNE CIBLE POUR UN ARMEMENT A GUIDAGE TERMINAL PAR IMAGERIE**
VERFAHREN ZUR BESTIMMUNG EINES ZIELS FÜR EINE WAFFE MIT ENDPHASENLENKUNG ÜBER BILDGEBUNG
METHOD FOR DESIGNATING A TARGET FOR A WEAPON HAVING TERMINAL GUIDANCE VIA IMAGING

(30) Priorité: 18.12.2009 FR 0906174
(43) Date de publication de la demande: 24.10.2012
(73) Titulaire: THALES, 92200 Neuilly-sur-Seine (FR)
(72) Inventeur: PAYOT, Etienne, F-78960 Voisins-le Bretonneux (FR)
(74) Mandataire: Henriot, Marie-Pierre
(86) Numéro de dépôt international: PCT/EP2010/068662
(87) Numéro de publication internationale: WO 2011/073034

(56) Documents cités:
- EP-A2- 1 677 076
- GB-A- 2 164 427
- US-A- 5 762 292

## Description

Le domaine de l'invention est celui de la désignation d'une cible pour un armement à guidage terminal par imagerie.

Pour atteindre une précision de frappe de classe métrique, les armements à guidage INS/GPS tels que l'AASM acronyme de l'expression « Armement Air-Sol Modulaire », mettent en oeuvre un guidage terminal par imagerie. Durant cette phase de guidage terminal, l'armement acquiert des images qu'il compare à des données de références (appelées primitives) de la cible et de son contexte et sur lesquelles il recale sa trajectoire.

On rappelle que les primitives sont des éléments de l'image sur lesquelles un traitement automatique permet d'extraire une information caractéristique d'une forme géométrique ponctuelle, linéaire voire surfacique, telles qu'un croisement (ponctuel), une portion de route (linéaire) ou le contour d'un champ (surface).

La procédure actuelle consiste à charger dans l'armement à guidage terminal par imagerie en Préparation de Mission (PMISS) des données de référence construites au sol par un opérateur à partir d'images de renseignement (image géométriquement rectifiées issues de satellite, Reconnaissance aéroportée, ..). Mais cette procédure ne permet pas de traiter des cibles en opportunités et notamment les cibles déplaçables (ou « Time Sensitive Target » en anglais).

Une autre solution consiste à construire les primitives en vol. Il existe actuellement plusieurs façons de construire ces primitives :
- à partir d'images issues d'un radar utilisé en mode imagerie SAR acronyme de l'expression anglo-saxonne « Synthetic Aperture Radar »,
- à partir de données optroniques,
- en réalisant la fusion entre ces deux types de données.

La construction des primitives à l'aide de données radar présente les inconvénients suivants :
- nécessité pour atteindre une bonne précision de recalage d'utiliser un mode THR (Très haute résolution) non opérationnel actuellement,
- grande différence entre la bande spectrale des primitives extraites et celle des primitives utilisées par l'Auto-Directeur,
- difficulté à extraire des primitives sur image SAR en milieu urbain en raison du masquage et des échos parasites,
- contrainte sur la trajectoire du porteur et sur le temps d'acquisition et de traitement pour obtenir une image SAR haute résolution,
absence de discrétion en raison de la nécessité d'éclairer la cible par un radar.

La construction des primitives à l'aide de données optroniques est par exemple obtenue de la façon suivante.

Une image de la zone où se situe la cible est acquise généralement en étant loin de la cible et donc en visée oblique. Les primitives sont extraites à partir de cette image en visée oblique. Un traitement d'image est alors appliqué à ces primitives pour qu'elles deviennent « exploitables » par l'armement notamment en en compensant les distorsions géométriques liées à l'acquisition selon une visée oblique. Mais jusqu'à présent ce traitement des primitives n'apporte pas satisfaction.

Par ailleurs les primitives construites à l'aide de données optroniques présentent les inconvénients suivants :
- le compromis entre le champ couvert pour avoir le contexte autour de la cible afin que l'armement puisse se recaler sur ce contexte, et la résolution pour avoir un bon positionnement des primitives, est difficile à réaliser; des techniques de construction d'une mosaïque d'images visant à reconstruire un champ plus large ont été envisagées mais elles requièrent un balayage autour de la cible et la précision relative des primitives peut être entachée d'erreur lors de cette phase de construction d'une mosaïque ;
- les images sont acquises en vue oblique ce qui ne correspond pas à l'angle d'approche de l'armement qui lui est proche de la verticale. Les primitives extraites de l'image optronique qui correspondent à des structures verticales ou en hauteur peuvent perturber le recalage de l'AD en raison des effets de perspective 3D. Il n'existe pas actuellement de traitement permettant d'identifier ces primitives perturbatrices afin de pouvoir les supprimer.

Le document EP 1 677 076 décrit également un procédé de désignation d'une cible.

Le but de l'invention est de pallier ces inconvénients.

Le procédé selon l'invention est fondé sur l'utilisation d'une voie d'imagerie virtuelle verticale pour désigner la position de la cible. La ligne de visée de cette voie d'imagerie virtuelle est asservie sur la ligne de visée optronique.

Plus précisément l'invention a pour objet un procédé de désignation d'une cible dans une zone, destinée à un armement à guidage terminal par imagerie, au moyen d'un système optronique aéroporté comprenant un imageur associé à des moyens de géolocalisation et une unité de traitement. Il est principalement caractérisé en ce qu'il comprend les étapes de :
- acquisition d'une image de la zone par l'imageur du système, et géolocalisation de cette image par les moyens de géo localisation,
- extraction dans une base de données d'une ortho image de la zone géo localisée dite image virtuelle de référence,
- désignation de la position de la cible dans l'ortho image virtuelle de référence,
- extraction dans l'ortho image virtuelle de référence, de primitives autour de la position de la cible, dites primitives virtuelles,
- détermination de la position de la cible par rapport à ces primitives virtuelles,
- transfert des primitives virtuelles et de la position de la cible vers l'armement à guidage terminal par imagerie.

L'extraction des primitives virtuelles peut être réalisée par l'unité de traitement ou à partir d'une base de données de primitives associée à la base de données d'images géo localisées.

Eventuellement, la base de données d'images virtuelles comporte en outre des métadonnées associées aux images et les primitives extraites sont associées à ces métadonnées.

Selon un premier mode d'utilisation du procédé selon l'invention, il comprend une étape de présentation d'une image virtuelle de référence à un opérateur.

L'image présentée peut être l'ortho-image de référence ; dans ce cas, l'étape de désignation de la cible est réalisée par l'opérateur sur cette ortho image et elle comprend une sous-étape de recentrage de l'image de référence pour obtenir une ortho image virtuelle centrée sur cette position.

Selon une alternative, l'image présentée peut être l'ortho image projetée selon les conditions de prises de vues de l'image optronique; dans ce cas l'étape de désignation de la position de la cible comprend une sous-étape de désignation de la cible dans l'image projetée, par l'opérateur pour obtenir une image virtuelle projetée centrée sur cette position, et une sous-étape de transformation de cette image virtuelle projetée centrée en une ortho-image virtuelle centrée.

Selon un autre mode d'utilisation du procédé selon l'invention, il comprend en outre les étapes :
- extraction de primitives dans l'image acquise, dites primitives acquises,
- mise en correspondance des primitives virtuelles et des primitives acquises,
- enrichissement des primitives virtuelles par les primitives acquises et désignation de la position de la cible.

L'invention a aussi pour objet un système optronique de désignation de cible équipé d'un imageur et relié à un armement à guidage terminal par imagerie. Il est caractérisé en ce qu'il comprend des moyens de géo localisation reliés à l'imageur, une base de données d'images virtuelles et une unité de traitement apte à mettre en oeuvre le procédé tel que décrit précédemment.

D'autres caractéristiques et avantages de l'invention apparaîtront à la lecture de la description détaillée qui suit, faite à titre d'exemple non limitatif et en référence aux dessins annexés dans lesquels :
la figure 1 représente un organigramme des différentes étapes d'un exemple de procédé selon l'invention,
la figure 2 illustre schématiquement deux modes de présentation des images virtuelles au pilote, selon l'invention,
la figure 3 représente schématiquement un exemple de système optronique de désignation selon l'invention.

D'une figure à l'autre, les mêmes éléments sont repérés par les mêmes références.

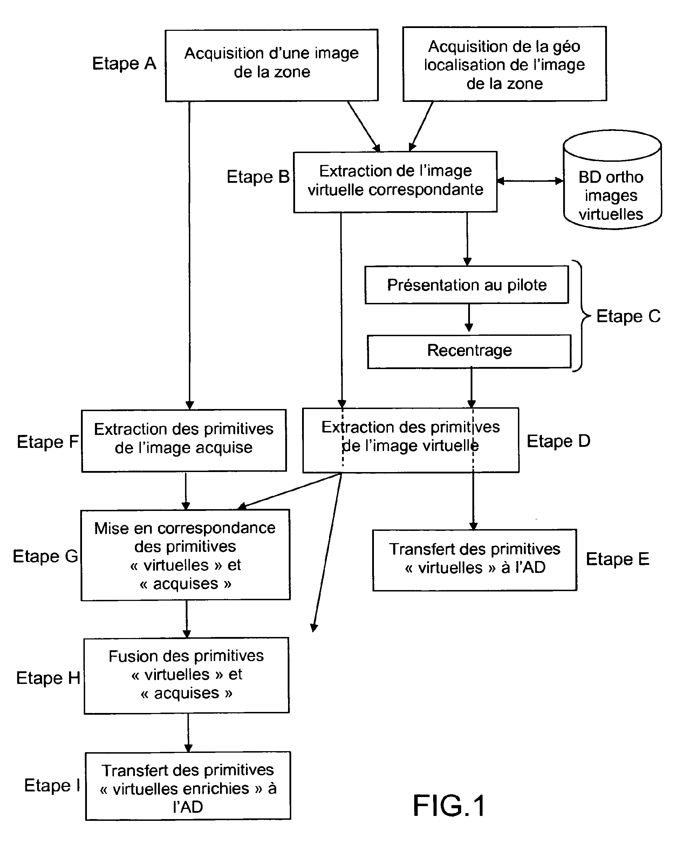

Le procédé selon l'invention est décrit en relation avec l'organigramme de la figure 1 et les figures 2 et 3.

Il comprend une étape d'acquisition de l'image de la zone dans laquelle se situe la cible ; cette acquisition est réalisée par l'imageur 1 du système aéroporté. Cette image 5 est géo localisée par les moyens 2 de géo localisation associés à cet imageur (étape A). Cette géo localisation est de préférence effectuée avec une précision décamétrique.

A partir de cette géo localisation, une image virtuelle 10 est extraite (étape B) d'une base de données 3 d'images géo localisées. Cette extraction correspond à un fenêtrage d'une zone de taille variable. De préférence, l'image est présentée à l'opérateur à une résolution proche de celle de l'image acquise. L'opérateur peut selon son besoin réaliser un zoom dans l'image virtuelle. Cette base de données est de préférence embarquée dans le système aéroporté 100 ; il s'agit par exemple d'une base de données satellitaire. Selon une variante l'image virtuelle 10 provient d'une image acquise précédemment par le système ou par un autre système aéroporté, cette image étant également géo localisée et stockée dans une base de données.

Cette image virtuelle 10 est une ortho image orientée selon les axes géographiques de prises de vues et avec une échelle cohérente avec celle de l'image observée ; il s'agit d'une image en vue verticale.

La cible n'est pas forcément présente dans cette voie d'imagerie virtuelle (par exemple dans le cas d'une cible déplaçable) mais les éléments de contexte qui fournissent les primitives le sont et peuvent permettre de se repérer.

La cible ou plutôt la position de la cible est alors désignée sur cette image virtuelle. Différents modes de désignation de la cible peuvent être utilisés.

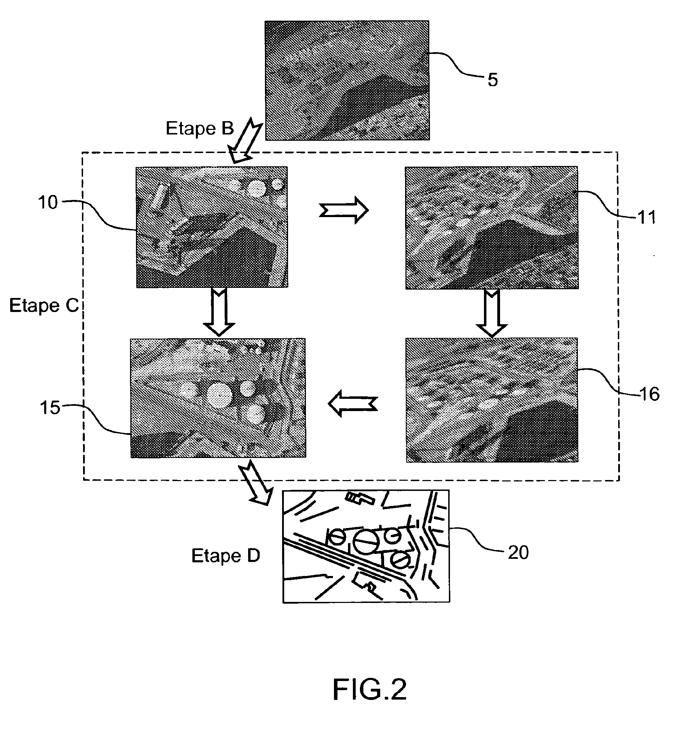

Dans un mode manuel illustré figure 2, un opérateur qui peut être le pilote de l'aéronef dans lequel le système 100 est embarqué, désigne manuellement la cible dans cette voie d'imagerie virtuelle. Selon le choix du pilote, lui est présenté (étape C) comme image virtuelle :
a. Soit l'ortho-image 10 de la zone observée telle qu'extraite.
b. Soit une reprojection 11 de l'ortho-image selon les conditions de prises de vues de l'imageur. Il s'agit d'une image en vue oblique. En effet, la désignation de la cible sur cette image peut être plus facile pour le pilote lorsque l'image virtuelle qui lui est présentée est plus proche de l'image acquise en vue oblique que ne le serait l'ortho image : ce mode de présentation permet au pilote de plus facilement faire le lien entre l'image acquise et l'image virtuelle qui lui est présentée. Cette re-projection est typiquement obtenue en réalisant une transformation géométrique de type affine ou homographique.

Sur cette image virtuelle (en vue verticale 10 ou en vue oblique 11), le pilote désigne le point précis de la position de la cible.

Dans les deux cas, le centre de l'image virtuelle 10 ou 11 présentée est asservi à la position de la ligne de visée de l'imageur ; l'image virtuelle est dite recentrée 15 ou 16 (étape C). C'est un recentrage manuel (réalisé par l'opérateur).

Les primitives -segments- dites primitives virtuelles 20 sont extraites de l'ortho-image (non reprojetée) virtuelle recalée 15 (étape D). De nombreuses procédures d'extraction de primitives existent dans le domaine du traitement d'images et peuvent être utilisées pour réaliser cette fonction. Certaines opèrent par seuillage du gradient de l'image pour en extraire les contours puis réalisent un « chaînage » afin de représenter ces contours sous la forme d'un ensemble de segments ou d'autres formes géométriques (cercle, ellipse, rectangle,..). D'autres techniques remplacent le seuillage par une sélection des lignes de crête ou des maximas des lignes de niveaux de l'image de gradient. Une fois extraites, ces primitives sont transférées à l'armement 110 avec la position de la cible par rapport aux primitives de cette ortho image (étape E). Ce transfert utilise les ressources matérielles de communication de l'unité de traitement 4 et son interface avec le porteur et l'armement. Selon une variante, les primitives virtuelles 20 sont pré-calculées sur les ortho images et stockées par exemple dans la base de données 3 des images virtuelles en étant associées aux images virtuelles correspondantes.

Dans un mode automatique, le pilote n'intervient pas ; l'enchaînement des étapes est le suivant.

Les primitives virtuelles 20 sont issues de l'ortho image 10.

Parallèlement aux étapes B et D, des primitives dites primitives acquises sont extraites directement à partir de l'image acquise 5 de l'étape A qui est généralement une image acquise en vue oblique (étape F).

Les primitives virtuelles 20 qui sont issues de l'ortho image 10 et les primitives acquises qui sont donc généralement issues d'une image en vue oblique, sont mises en correspondance (étape G). Cette mise en correspondance consiste principalement à repérer des couples de primitives acquises et virtuelles homologues (qui se correspondent), puis à déterminer la transformation permettant de passer du repère des primitives acquises au repère « ortho » des primitives virtuelles. De nombreuses techniques existent pour réaliser ce type de mise en correspondance. Par exemple, les techniques exploitant l'algorithme ICP (pour « Iterative Closest Point ») qui permet d'affiner une mise en correspondance initiale calculée à partir des données de géo-localisation. D'autres approches utilisent l'algorithme RANSAC (pour « RANdom SAmple Consensus ») de mise en correspondance statistique robuste. Les primitives ainsi mises en correspondance sont alors fusionnées (étape H) de manière à enrichir les primitives virtuelles 20. La désignation de la cible est réalisée lors de ces étapes G et H de mise en correspondance - fusion en recentrant les primitives virtuelles autour du point désigné par le pilote. Ce recentrage est possible suite à la mise en correspondance des primitives entre l'image acquise et l'ortho-image virtuelle.

Ces primitives virtuelles sont alors transférées à l'armement 110 avec la position de la cible par rapport à ces primitives.

Les primitives virtuelles et/ou acquises sont de préférence extraites avec une précision relative (i.e entre primitives) métrique voire sub-métrique.

Le procédé fonctionne d'autant mieux que l'image virtuelle est récente ; des modifications dues à des constructions ou des destructions récentes peuvent en effet générer des primitives inexactes.

Il présente plusieurs avantages :
- il ne nécessite pas un géo-référencement métrique mais seulement de la classe décamétrique compatible des performances envisagées puisque soit c'est le pilote qui désigne manuellement la cible soit c'est le recalage/fusion avec les primitives issues des ortho-images qui le réalise ;
- les primitives sont extraites sur une ortho-image (en vue verticale) et donc ne souffrent pas des effets de perspective qui rendent délicat le positionnement précis des primitives extraites sur des images en visée oblique ; dans le cas où une fusion est réalisée, ces primitives extraites sur l'ortho-image permettent d'effectuer le tri et la sélection des primitives pertinentes ;
- dans les deux modes manuel et automatique, la taille de la zone sur laquelle les primitives sont extraites peut ne pas être limitée à la zone visualisée par le pilote ; la contrainte de compromis champ/résolution est donc supprimée ;
- la résolution de l'image virtuelle sur laquelle la désignation est réalisée et sur laquelle les primitives sont extraites, n'est pas liée à la distance porteur/cible et peut donc permettre une désignation longue distance.

Eventuellement, la base de données 3 d'images virtuelles comporte en outre des métadonnées associées aux images. Ces métadonnées sont par exemple constituées de masques permettant d'associer à chaque pixel de l'ortho-image la nature de l'objet correspondant (route, champ, forêt, bâtiment,...). Les primitives extraites sont alors associées à ces métadonnées.

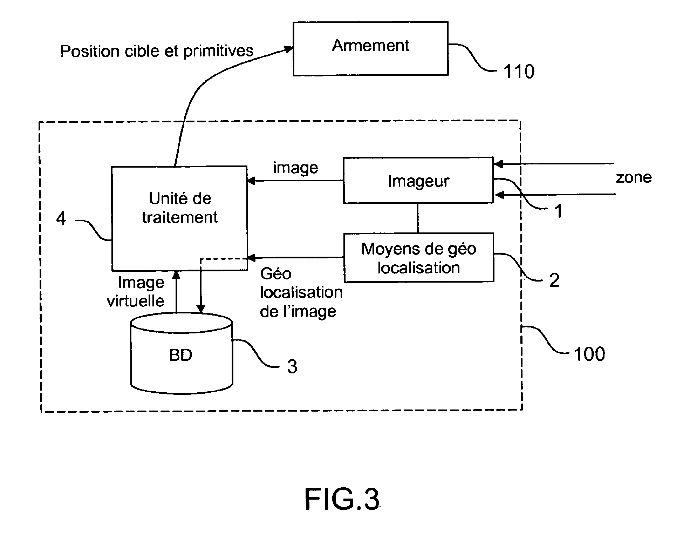

La figure 3 montre un système optronique 100 apte à mettre en oeuvre le procédé selon l'invention. Il comprend un imageur 1 équipé par exemple d'un détecteur matriciel et relié à des moyens de géo localisation 2 de l'image tels qu'un dispositif GPS associé à des moyens de mesure angulaire tels qu'une centrale inertielle. La géo localisation est transmise via une unité de traitement 4, à une base de données 3 d'images virtuelles.

Cette unité de traitement 4 comprend des moyens de mise en oeuvre du procédé tel que décrit et des moyens de transmission des primitives et de la position de la cible à l'armement 110 à guidage terminal par imagerie.

## Revendications

1. Procédé de désignation d'une cible dans une zone, destinée à un armement (110) à guidage terminal par imagerie, au moyen d'un système optronique (100) aéroporté comprenant un imageur (1) associé à des moyens de géo localisation (2) et une unité de traitement (4), qui comprend une étape d'acquisition d'une image de la zone (5) par l'imageur du système, **caractérisé en ce qu'**il comprend les étapes de :
- géo localisation de cette image de la zone par les moyens de géo localisation (étape A),
- extraction dans une base de données (3) d'une ortho image de la zone géo localisée dite image virtuelle de référence (10) (étape B),
- désignation de la position de la cible dans l'ortho image virtuelle de référence (10) (étape C ou étapes G et H),
- extraction dans l'ortho image virtuelle de référence (10 ou 15), de primitives autour de la position de la cible, dites primitives virtuelles (20), une primitive étant une information caractéristique d'une forme géométrique de l'image (étape D),
- détermination de la position de la cible par rapport à ces primitives virtuelles (20),
- transfert des primitives virtuelles et de la position de la cible vers l'armement (110) à guidage terminal par imagerie (étape E ou 1).

2. Procédé de désignation d'une cible selon la revendication précédente, **caractérisé en ce que** l'extraction des primitives virtuelles (20) est réalisée par l'unité de traitement (4) ou à partir d'une base de données de primitives associée à la base de données (3) d'images géo localisées.

3. Procédé de désignation d'une cible selon l'une des revendications précédentes, **caractérisé en ce que** la base de données d'images virtuelles (3) comporte en outre des métadonnées associées aux images et **en ce que** les primitives extraites (20) sont associées à ces métadonnées.

4. Procédé de désignation d'une cible selon la revendication précédente, **caractérisé en ce qu'**il comprend une étape de présentation d'une image virtuelle de référence à un opérateur (étape C).

5. Procédé de désignation d'une cible selon la revendication précédente, **caractérisé en ce que** l'image présentée est l'ortho-image de référence (10) et **en ce que** l'étape de désignation de la cible est réalisée par l'opérateur sur cette ortho image et comprend une sous-étape de recentrage de l'image de référence (10) pour obtenir une ortho image virtuelle centrée (15) sur cette position.

6. Procédé de désignation d'une cible selon la revendication 4, **caractérisé en ce que** l'image présentée est l'ortho image projetée (11) et **en ce que** l'étape de désignation de la position de la cible comprend une sous-étape de désignation de la cible dans l'image projetée selon les conditions de prises de vues de l'image optronique, par l'opérateur pour obtenir une image virtuelle projetée centrée (16) sur cette position, et une sous-étape de transformation de cette image virtuelle projetée centrée en une ortho-image-virtuelle centrée (15).

7. Procédé de désignation d'une cible selon l'une des revendications 1 à 3, **caractérisé en ce qu'**il comprend en outre les étapes :
- extraction de primitives dans l'image acquise (5), dites primitives acquises (étape F),
- mise en correspondance des primitives virtuelles (20) et des primitives acquises (étape G),
- enrichissement des primitives virtuelles (20) par les primitives acquises et désignation de la position de la cible (étape H).

8. Système optronique (100) de désignation de cible équipé d'un imageur (1) et relié à un armement à guidage terminal par imagerie (110), **caractérisé en ce qu'**il comprend des moyens de géo localisation (2) de l'image acquise par l'imageur, une base de données (3) d'images virtuelles et une unité de traitement (4) configuré pour mettre en oeuvre le procédé selon l'une des revendications précédentes.

## Patentansprüche

1. Verfahren zum Designieren eines Ziels in einer Zone, bestimmt für eine Waffe (110) mit Endphasenlenkung per Bildgebung, mittels eines in der Luft geführten optronischen Systems (100), das einen mit Geolokalisierungsmitteln (2) assoziierten Bildgeber (1) und eine Prozessoreinheit (4) umfasst, das einen Schritt des Erfassens eines Bildes der Zone (5) mit dem Bildgeber des Systems beinhaltet, **dadurch gekennzeichnet, dass** es die folgenden Schritte beinhaltet:
- Geolokalisieren dieses Bildes der Zone mit den Geolokalisierungsmitteln (Schritt A);
- Extrahieren eines Orthobildes der geolokalisierten Zone, virtuelles Referenzbild (10) genannt, aus einer Datenbank (3) (Schritt B);
- Designieren der Position des Ziels in dem virtuellen Referenzorthobild (10) (Schritt C oder Schritte G und H);
- Extrahieren, in dem virtuellen Referenzorthobild (10 oder 15), von Primitiva um die Position des Ziels, virtuelle Primitiva (20) genannt, wobei ein Privitivum eine für eine geometrische Form des Bildes charakteristische Information ist (Schritt D);
- Ermitteln der Position des Ziels in Bezug auf diese virtuellen Primitiva (20);
- Übertragen der virtuellen Primitiva und der Position des Ziels zu der Waffe (110) mit Endphasenlenkung per Bildgebung (Schritt E oder I).

2. Verfahren zum Designieren eines Ziels nach dem vorherigen Anspruch, **dadurch gekennzeichnet, dass** die virtuellen Primitiva (20) von der Prozessoreinheit (4) oder aus einer mit der Datenbank (3) von geolokalisierten Bildern assoziierten Datenbank von Primitiva extrahiert werden.

3. Verfahren zum Designieren eines Ziels nach einem der vorherigen Ansprüche, **dadurch gekennzeichnet, dass** die Datenbank (3) von virtuellen Bildern ferner mit den Bildern assoziierte Metadaten umfasst, und dadurch, dass die extrahierten Primitiva (20) mit diesen Metadaten assoziiert sind.

4. Verfahren zum Designieren eines Ziels nach dem vorherigen Anspruch, **dadurch gekennzeichnet, dass** es einen Schritt des Präsentierens eines virtuellen Referenzbildes einem Bediener (Schritt C) beinhaltet.

5. Verfahren zum Designieren eines Ziels nach dem vorherigen Anspruch, **dadurch gekennzeichnet, dass** das präsentierte Bild das Referenzorthobild (10) ist, und dadurch, dass der Schritt des Designierens des Ziels vom Bediener an diesem Orthobild ausgeführt wird und einen Unterschritt des Neuzentrierens des Referenzbildes (10) beinhaltet, um ein auf diese Position zentriertes virtuelles Orthobild (15) zu erhalten.

6. Verfahren zum Designieren eines Ziels nach Anspruch 4, **dadurch gekennzeichnet, dass** das präsentierte Bild das projizierte Orthobild (11) ist, und dadurch, dass der Schritt des Designierens der Position des Ziels einen Unterschritt des Designierens des Ziels in dem projizierten Bild gemäß den Belichtungsbedingungen des optronischen Bildes durch den Bediener, um ein auf diese Position zentriertes virtuelles projiziertes Bild (16) zu erhalten, sowie einen Unterschritt des Umwandeins dieses zentrierten projizierten virtuellen Bilds in ein virtuelles zentriertes Orthobild (15) beinhaltet.

7. Verfahren zum Designieren eines Ziels nach einem der Ansprüche 1 bis 3, **dadurch gekennzeichnet, dass** es ferner die folgenden Schritte beinhaltet:
- Extrahieren von Primitiva aus dem erfassten Bild (5), erfasste Primitiva genannt (Schritt F);
- In-Übereinstimmung-Bringen der virtuellen Primitiva (20) und der erfassten Primitiva (Schritt G);
- Anreichern der virtuellen Primitiva (20) mit den erfassten Primitiva und Designieren der Position des Ziels (Schritt H).

8. Optronisches System (100) zum Designieren eines Ziels, ausgestattet mit einem Bildgeber (1) und verbunden mit einer Waffe (110) mit Endphasenlenkung per Bildgebung, **dadurch gekennzeichnet, dass** es Mittel (2) zum Geolokalisieren des von dem Bildgeber erfassten Bildes, eine Datenbank (3) mit virtuellen Bildern und eine Prozessoreinheit (4) umfasst, konfiguriert zum Implementieren des Verfahrens nach einem der vorherigen Ansprüche.

## Claims

1. A method for designating a target in a zone designed for a weapon (110) with imaging terminal guidance, by means of an airborne optronic system (100) comprising an imager (1) associated with geolocation means (2) and a processing unit (4), which comprises a step of acquiting an image of the zone (5) by the imager of said system, **characterised in that** it comprises the following steps:
- geolocating said image of said zone via said geolocation means (step A);
- extracting, from a database (3), an orthoimage of the geolocated zone, referred to as virtual reference image (10) (step B);
- designating the position of said target in said virtual reference orthoimage (10) (step C or steps G and H);
- extracting, from said virtual reference orthoimage (10 or 15), primitives around the position of said target, referred to as virtual primitives (20), with a primitive being characteristic information of a geometric shape of said image (step D);
- determining the position of said target relative to said virtual primitives (20);
- transferring virtual primitives and the position of said target to said weapon (110) with imaging terminal guidance (step E or I).

2. The method for designating a target according to the preceding claim, **characterised in that** said virtual primitives (20) are extracted by said processing unit (4) or from a database of primitives associated with said database (3) of geolocated images.

3. The method for designating a target according to any one of the preceding claims, **characterised in that** said database (3) of virtual images further comprises metadata associated with said images and **in that** the extracted primitives (20) are associated with this metadata.

4. The method for designating a target according to the preceding claim, **characterised in that** it comprises a step of showing a virtual reference image to an operator (step C).

5. The method for designating a target according to the preceding claim, **characterised in that** the image shown is said reference orthoimage (10) and **in that** said step of designating said target is carried out by the operator on said orthoimage and comprises a sub-step of re-centring said reference image (10) so as to obtain a virtual orthoimage (15) centred on this position.

6. The method for designating a target according to claim 4, **characterised in that** the image shown is the projected orthoimage (11) and **in that** said step of designating the position of said target comprises a sub-step of designating, by the operator, said target in said projected image according to the exposure conditions of said optronic image so as to obtain a virtual projected image (16) centred on this position, and a sub-step of converting said centred projected virtual image into a virtual centred orthoimage (15).

7. The method for designating a target according to any one of claims 1 to 3, **characterised in that** it further comprises the following steps:
- extracting primitives from said acquired image (5), referred to as acquired primitives (step F);
- matching virtual primitives (20) and acquired primitives (step G);
- enhancing virtual primitives (20) with said acquired primitives and designating the position of the target (step H).

8. An optronic system (100) for designating a target, provided with an imager (1) and connected to a weapon (110) with imaging terminal guidance, **characterised in that** it comprises means (2) for geolocating the image acquired by said imager, a database (3) of virtual images and a processing unit (4) configured to implement the method according to any one of the preceding claims.
